# FASCICULE DE BREVET EUROPEEN

(11) **EP 3 174 700 B1**
(45) Date de publication et mention de la délivrance du brevet: **27.05.2020**
(21) Numéro de dépôt: 15774964.9
(22) Date de dépôt: 21.07.2015
(51) Int. Cl.: B29D 30/06

(54) **MATRICE TEXTURÉE AVEC BLOCS POUR FABRICATION D'UN MOULE TEXTURÉ POUR LE MOULAGE ET LA VULCANISATION D'UN PNEUMATIQUE ET PROCÉDÉ**
TEXTURIERTER STEMPEL MIT BLÖCKEN ZUR HERSTELLUNG EINER TEXTURIERTEN FORM ZUR FORMUNG UND HÄRTUNG VON REIFEN UND VERFAHREN
TEXTURED DIE WITH BLOCKS FOR THE PRODUCTION OF A TEXTURED MOULD FOR THE MOULDING AND CURING OF TYRES AND METHOD

(30) Priorité: 30.07.2014 FR 1401753
(43) Date de publication de la demande: 07.06.2017
(73) Titulaire: Compagnie Générale des Etablissements Michelin, 63000 Clermont-Ferrand (FR)
(72) Inventeur: VILLENEUVE, Bernard, F-63040 Clermont-Ferrand Cedex 9 (FR)
(74) Mandataire: Demaure, Pierre-Yves
(86) Numéro de dépôt international: PCT/IB2015/001213
(87) Numéro de publication internationale: WO 2016/016699

(56) Documents cités:
- WO-A1-99/48674
- WO-A1-2010/096072
- WO-A2-2010/072961
- US-A- 2 263 001
- US-A1- 2002 176 792
- US-A1- 2003 111 150

## Description

### DOMAINE TECHNIQUE DE L'INVENTION

La présente invention concerne une matrice représentant un modèle de sculptures d'une bande de roulement d'un pneumatique à mouler. Elle prévoit également un procédé de fabrication d'un moule pour moulage et vulcanisation de pneumatiques.

### ETAT DE LA TECHNIQUE ANTERIEURE

**Le** document WO2010072961 décrit une matrice pour la fabrication d'un moule de pneumatique réalisée par frittage laser. Grâce à ce mode de fabrication, la pièce à fabriquer peut être modélisée par ordinateur et facilement fabriquée sur la base de cette modélisation. Le document décrit toutefois un élément monopièce dont la conception et la fabrication doivent être revus dès qu'un changement architectural ou dimensionnel intervient sur le produit final à mouler. En outre, les pièces de grande dimension fabriquées par ce procédé sont relativement coûteuses à réaliser, principalement dû au fait que les matières de base sont spécifiques au mode de fabrication.

**La** demande WO2010096072 concerne un procédé de moulage par coulée, utile dans le cadre de la fabrication d'objets micro-texturés. L'introduction d'une pluralité de micro-motifs sur la surface d'un objet permet d'ajouter à l'objet micro-texturé certaines caractéristiques, comme par exemple une augmentation de l'hydrophobicité. Certains des procédés de coulée et de moulage décrits dans ce document permettent d'aboutir à la fabrication d'objets présentant à la fois des macro et micro caractéristiques, comme par exemple des micro-motifs à l'intérieur ou sur des zones à macro caractéristiques. Le procédé ici décrit est exclusivement utilisé sur des surfaces courbées.

**Le** document US20020176792 propose un procédé de fabrication d'un segment de moule de bandage pneumatique avec une surface de bande de roulement en métal poreux. Un modèle de segment de pneumatique annulaire en matériau réfractaire est formé dans ce moule, avec des segments du modèle de pneumatique qui sont utilisés pour façonner et former chaque segment du moule de pneumatique à partir de métal en poudre, et au moyen de l'application de chaleur et de pression permettant de fritter le métal en fonction du modèle de pneumatique. Des lames peuvent être montées dans les segments du modèle de pneumatique, afin de mouler les fentes de la bande de roulement du pneumatique.

Il existe donc un besoin pour une solution permettant de produire des matrices à des coûts moindres, permettant à la fois de prendre en compte les évolutions du produit final et les exigences de plus en plus fortes concernant les caractéristiques de formes, de dimensions et de précision des différentes zones des matrices.

**Pour** pallier ces différents inconvénients, l'invention prévoit différents moyens techniques.

### EXPOSE DE L'INVENTION

Tout d'abord, un premier objet de l'invention consiste à prévoir une matrice représentant un modèle de sculptures de bande de roulement de pneumatique comportant des éléments de textures sensiblement complexes et/ou de très petites dimensions avec une très grande précision et à des coûts attrayants.

Un autre objet de l'invention consiste à prévoir un procédé de fabrication de moules pour moulage et vulcanisation de pneumatiques permettant d'obtenir plusieurs moules comportant chacun un haut niveau de qualité, à des coûts avantageux.

Pour ce faire, l'invention prévoit une matrice représentant un modèle de sculptures d'une bande de roulement d'un pneumatique à mouler, ladite matrice étant constituée d'une pluralité de blocs séparés par des sillons, les sillons étant formés par des surfaces sensiblement planes, au moins une partie de ces surfaces sensiblement planes étant pourvues de textures. Les textures des matrices sont fabriquées par impression 3D ou usinage laser, à l'aide de poinçons, ou par fusion sélective de poudre métallique ou par électro-érosion. Les surfaces sensiblement planes pourvues de textures sont sur des parois de blocs. La matrice est formée par agrégation d'une pluralité de blocs.

Selon une telle architecture il est possible de réaliser une matrice portant des surfaces texturées de très haute précision, même si les surfaces texturées sont difficiles d'accès. Par ailleurs, une seule matrice permet de fabriquer plusieurs moules, rendant le concept particulièrement avantageux.

Selon un mode de réalisation avantageux, les surfaces sensiblement planes pourvues de textures sont en fond de sillons.

De manière avantageuse, les textures sont agencées sur des sommets de sculptures.

De manière avantageuse, les parois de blocs sont biseautées.

Egalement de manière avantageuse, les textures comprennent une pluralité d'éléments en creux ou en protubérance, venus de matière avec ladite matrice.

Selon une autre variante de réalisation, tout ou partie des textures est formé par des cônes répartis dans la texture selon une densité au moins égale à un cône par millimètre carré (mm²), chaque cône ayant une section moyenne comprise entre 0,0005 mm² et 1 mm².

Selon une autre variante de réalisation, tout ou partie des textures sont des stries sensiblement parallèles entre elles, le pas des stries dans le motif étant au plus égal à 0,5 mm, chaque strie ayant une largeur moyenne comprise entre 0,02 mm et 0,5 mm.

Selon encore un autre mode de réalisation, tout ou partie des textures forment des parallélépipèdes de côté compris entre 0,05 mm et 0,5 mm, de hauteur comprise entre 0,05 mm et 0,5 mm, la distance entre deux parallélépipèdes adjacents dans la texture étant comprise entre 0,05 mm et 0.5 mm.

Selon un autre mode de réalisation, les éléments en protubérance forment des brins, lesdits brins étant répartis dans le motif selon une densité au moins égale à un brin par millimètre carré (mm²), chaque brin ayant une section moyenne comprise entre 0,0005 mm² et 1 mm².

Selon une autre variante de réalisation, les éléments en protubérance forment des lames parallèles entre elles, le pas des lames dans le motif étant au plus égal à 0,5 mm, chaque lame ayant une largeur moyenne comprise entre 0,02 mm et 0,5 mm.

Selon un autre mode de réalisation, les éléments en creux ou en protubérance présentent des formes et des distances variables entre eux.

Selon encore un autre mode de réalisation,

L'invention prévoit également un procédé de fabrication d'un moule pour moulage et vulcanisation de pneumatiques, comprenant les étapes consistant à :
- fabriquer une matrice telle que préalablement décrite comprenant au moins un sillon formé par des surfaces sensiblement planes, au moins une partie de ces surfaces sensiblement planes étant pourvue de textures et les surfaces sensiblement planes pourvues de textures sont sur des parois de blocs, ladite matrice étant formée par agrégation d'une pluralité de blocs;
- à partir de la matrice, fabriquer un moule correspondant à la forme inverse du pneumatique à mouler en matériau souple, de préférence en silastène ;
- à partir du moule en matériau souple, fabriquer une matrice en matériau friable, de préférence en plâtre, correspondant au profil du pneumatique à mouler;
- à partir de la matrice de matériau friable, fabriquer un moule correspondant à la forme inverse du pneumatique à mouler, en matériau métallique, de préférence en aluminium ;
- retirer la matrice de matériau friable (par exemple par destruction de cette dernière) de façon à libérer le moule métallique obtenu.

### DESCRIPTION DES FIGURES

Tous les détails de réalisation sont donnés dans la description qui suit, complétée par les figures 1 à 10, présentées uniquement à des fins d'exemples non limitatifs, et dans lesquelles :
- la figure 1a est une vue en perspective d'une portion d'un exemple de matrice selon l'invention ;
- la figure 1b est une vue agrandie d'une zone texturée de la matrice de la figure 1a ;
- la figure 2 est une vue en perspective d'un exemple de poinçon pouvant servir à produire les zones ou parois texturées de la matrice de la figure 1a ;
- la figure 3a montre les blocs d'une matrice selon l'invention selon une vue en perspective ;
- la figure 3b montre un des blocs de la figure 3a en vue agrandie ;
- les figures 4 à 9 illustrent divers exemples de types de textures susceptibles d'être agencées sur une matrice selon l'invention ;
- la figure 10 présente un diagramme illustrant les principales étapes pour la fabrication d'un moule pour moulage et vulcanisation d'un pneumatique à partir d'une matrice selon l'invention.

### DESCRIPTION DETAILLEE DE L'INVENTION

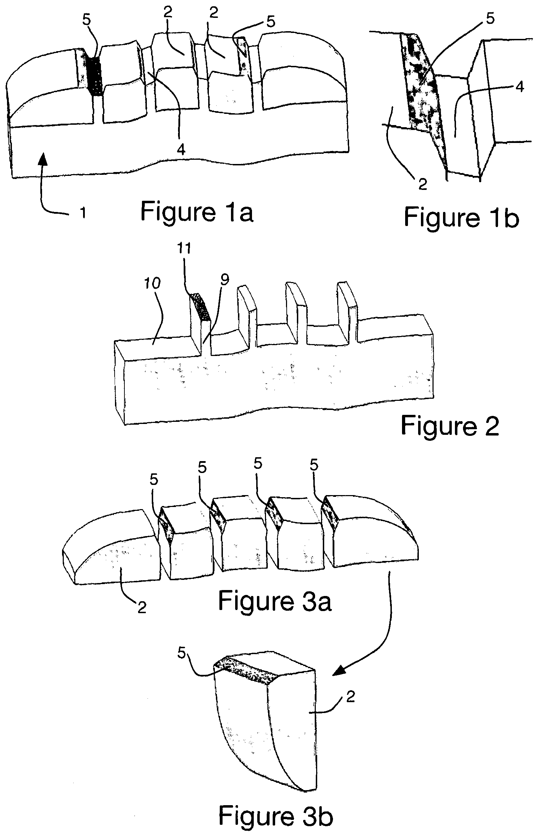

La figure 1a illustre un exemple de mode de réalisation d'une matrice 1 selon l'invention. Plus précisément, la figure illustre une section d'une matrice comportant une pluralité de blocs 2 séparés par des sillons 4. Les blocs 2 peuvent correspondre par exemple à des éléments de sculpture du pneumatique modélisé par la matrice. La matrice délimite une pluralité de faces qui correspondent à des portions de la bande de roulement du pneumatique modélisé. Selon l'invention, une ou plusieurs de ces faces sont pourvues de textures 5, tel que montré par exemple aux figures 1a et 1b.

En outre, les textures 5 peuvent être agencées à différentes zones, en fond de sillon, et/ou sur les parois des blocs et/ou sur la surface supérieure des blocs. Par exemple, l'exemple de la figure 1a prévoit des textures 5 en fond de sillon, se prolongeant sur les parois des blocs jusqu'au sommet des blocs, couvrant des portions de sommets de blocs. Dans une variante non illustrée, les textures se prolongent sur la totalité du sommet d'au moins une partie des blocs.

Selon les modes de réalisation, la matrice 1 est réalisée par agrégation d'une pluralité de blocs sur un support comme dans l'exemple de la figure 3a (où le support n'est pas illustré afin de bien montrer les blocs).

La figure 2 illustre un exemple de poinçon 10 avec des zones ou secteurs comportant des textures 11 inverses de celles à réaliser sur la matrice. Ce type de poinçon est susceptible d'être utilisé pour réaliser les textures sur une matrice telle que celle illustrée à la figure 1a. En fonction des pièces à fabriquer, notamment du nombre et de la position des textures, une seule ou plusieurs zones texturées sont prévues sur le poinçon. Les zones texturées du poinçon sont avantageusement prévues sur des sections proéminentes 9 spécifiquement prévues pour porter les textures à transmettre à la pièce correspondante. Cependant, comme on peut le voir à la figure 1b, certaines faces de la matrice 1 peuvent tout de même être d'accès restreint ou difficile. Dans de tels cas, la mise en forme des faces texturées peut s'avérer délicate.

Tel qu'énoncé supra, la figure 3a illustre une vue en perspective d'un exemple de matrice 1 obtenue à partir de la mise en commun d'une pluralité de blocs 2, dans une vue en perspective où seuls les blocs 2 sont montrés afin de bien les mettre en évidence. La figure 3b est une vue agrandie du bloc de droite de la figure 3a, ce dernier étant isolé des autres et repositionné de façon à ce que la zone texturée soit facilement accessible. La mise à disposition de blocs 2 avantageusement fabriqués de façon indépendante du reste de la matrice, permet de les manipuler sans contrainte, en particulier pour effectuer les éventuelles étapes relatives à l'ajout des textures sur les zones prévues à cet effet. Par exemple, à la figure 3b, la zone texturée 5 est facilement accessible pour la mise en forme des textures, que ce soit à l'aide d'un poinçon, par usinage laser, ou toute autre méthode.

On constate que les blocs 2 permettent de fournir des parois ou faces de sillons pourvues de textures de très haute précision, même si les motifs sont complexes et/ou de dimensions relativement petites. En outre, les textures étant réalisées sur des éléments séparés (les blocs), il est possible de prévoir des conditions de fabrication spécifiquement adaptées pour que les niveaux de qualité et de précisions soient assurés de façon constante sur l'ensemble des surfaces, à des coûts particulièrement attractifs. Enfin, à partir d'un corps unique de matrice, le concept permet de réaliser des variantes architecturales dans lesquelles les agencements de textures peuvent varier afin de créer un nombre considérable de variantes à faible coût. Ces agencements peuvent prévoir des textures dont les formes et/ou les dimensions et/ou les répartitions peuvent varier, en fonction des besoins.

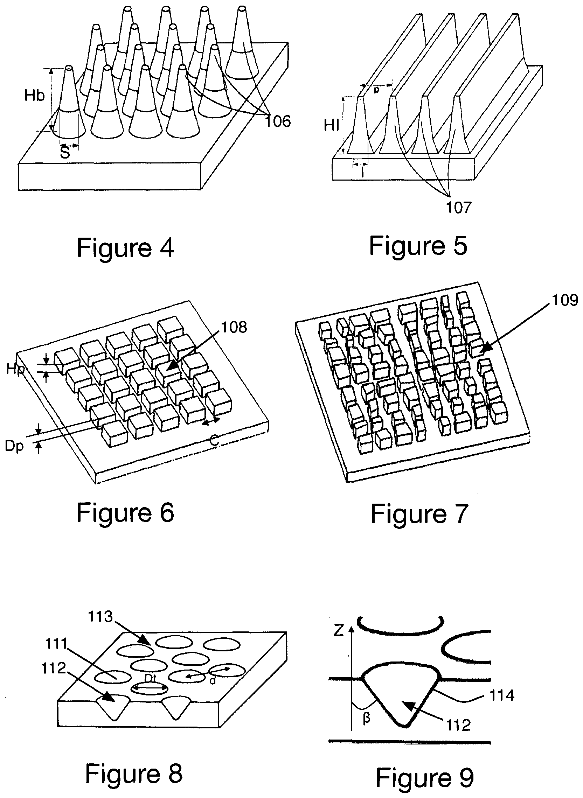

Les figures 4 à 9 illustrent d'autres exemples de textures pouvant être disposées sur une matrice selon l'invention. La figure 4 illustre un mode de réalisation dans lequel le motif comporte une pluralité de brins 106. Les brins 106 sont répartis dans le motif selon une densité au moins égale à un brin par mm², chaque brin ayant une section moyenne S comprise entre 0,0005 mm² et 1 mm². On note que la section moyenne de chaque brin correspond à la moyenne des sections S mesurées à intervalles réguliers depuis la base du brin. Les brins 106 ont une forme globalement conique avec une section diminuant dans la hauteur Hb de ces brins.

La figure 5 illustre un mode de réalisation dans lequel le motif comporte une pluralité de lames 107 parallèles entre elles, le pas des lames 107 dans le motif étant au plus égal à 0,5 mm, chaque lame 107 ayant une largeur moyenne comprise entre 0,02 mm et 0,5 mm. On note que la largeur moyenne correspond à la moyenne des largeurs l mesurées à intervalles réguliers dans la hauteur Hl de la lame, la hauteur de chaque lame étant comprise entre 0,05 et 0,5 mm. Dans une autre variante de réalisation, le motif comporte une combinaison de brins 106 et/ou et de lames 107.

L'invention n'est pas limitée aux exemples décrits et représentés et diverses modifications peuvent y être apportées sans sortir de son cadre. Ainsi, selon une autre variante de réalisation non limitative, les lames 107 de la figure 5 peuvent être discontinues. Elles présentent une partie plane entre elles. Elles peuvent en outre présenter entre elles des différences de section. De plus, les lames peuvent posséder des courbures ou des angles, notamment dans leur longueur. Elles peuvent en outre, être de longueur variable.

Dans l'exemple de la figure 6, les motifs ont une section parallélépipédique 108 de côté C compris entre 0,05 mm et 0,5 mm, de hauteur Hp comprise entre 0,05 mm et 0,5 mm, la distance Dp entre deux cavités adjacentes dans la texture étant comprise entre 0,05 mm et 0.5 mm. En variante la section des motifs peut être circulaire, polygonale (par exemple hexagonale). Avec les structures carrée ou polygonale, il est possible d'organiser plus facilement les éléments les uns par rapport aux autres de sorte à limiter la surface des zones intermédiaires entre les éléments.

Dans la variante de la figure 7, les éléments 109 présentent des formes et des distances variables entre eux. Cette variante permet de rentre moins visible les détails de la texture.

La figure 8 illustre le motif selon une autre variante de réalisation non limitative. Dans cette variante, le motif est formé par une pluralité de cavités 112. Les cavités 112 sont ici en forme de cônes qui s'étendent dans la profondeur du moule et débouchent sur le moule en formant des ouvertures circulaires 111. Les cavités 112 ont ainsi une section qui diminue dans la profondeur du moule. On note que dans cette variante, les ouvertures 111 des cavités 112 ne se touchent pas. Les ouvertures 111 sont séparées par des zones intermédiaires 113. En outre, les ouvertures 111 sont régulièrement réparties sur le moule de sorte que la distance d entre chaque ouverture du motif est globalement similaire.

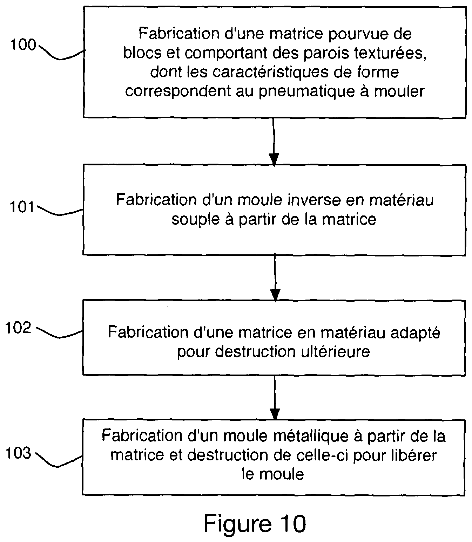

La figure 9 est une vue agrandie du motif de la figure 10. Tout ou partie des cavités a ici au moins une paroi 114 qui, selon une vue en coupe, forme un angle β compris entre 10° et 60° par rapport à une direction Z perpendiculaire au motif.

La matrice 1 selon l'invention, les blocs 2 et en particulier la mise en forme des textures 5 peut être réalisée par impression 3D, usinage laser, à l'aide de poinçons ou par électro-érosion. Une telle matrice présente l'avantage de permettre la fabrication d'une pluralité de moules servant au moulage et à la vulcanisation de pneumatiques. Grâce à la matrice texturée 1 servant de modèle de base, les moules fabriqués sont pourvus de textures inverses à celle de la matrice, conférant aux pneumatiques moulés des textures conformes à celle de la matrice de base, sans devoir prévoir d'étape spécifique d'usinage ultérieur pour le moule ou pour les pneumatiques. Il en résulte une facilité de fabrication particulièrement avantageuse, et des coûts réduits.

Cette matrice ne peut toutefois pas être directement utilisée pour la fabrication industrielle des moules qui permettront de mouler et vulcaniser les pneumatiques. En effet, puisque le moule final est en matériau métallique, donc non souple, la matrice initiale, également non souple, ne peut en général pas servir à produire le moule final, puisque les deux éléments jumelés seraient difficilement séparables. Il est donc prévu, de façon connue, de prévoir une série d'étapes intermédiaires permettant de passer d'une matrice rigide, à une moule intermédiaire souple, puis une matrice facile à retirer une fois le moule définitif métallique produit. Ces différentes étapes sont illustrées à la figure 10.

L'organigramme fonctionnel de la figure 10 présente les principales étapes du procédé de fabrication d'un moule pour moulage et vulcanisation de pneumatique selon l'invention. A l'étape 100, on effectue tout d'abord la fabrication d'une matrice 1 comportant des blocs 2 et des parois texturées 5, dont les caractéristiques de forme correspondent au pneumatique à mouler. Les blocs 2 sont avantageusement fabriqués séparément, dans des conditions permettant la mise en forme des textures, puis rapportés sur le corps de la matrice. La fixation peut être prévue par collage, vissage, ou autre.

A partir de cette matrice, à l'étape 101, on réalise un moule inverse en matériau souple. Du fait de la souplesse du matériau, le moule obtenu peut être aisément retiré de la matrice 1 qui lui sert à la fois de support et de modèle. A l'étape 102, une autre matrice est fabriquée, cette fois à partir du moule en matériau souple obtenu à l'étape 101. Cette matrice étant sujette à être sacrifiée à une étape subséquente, il est avantageusement prévu de produire la pièce en matériau peu coûteux et facilement destructible, comme par exemple du plâtre. Il est à noter que cette matrice possède un profil correspondant à celui de la matrice 1 initiale. Une fois la matrice de plâtre obtenue, celle-ci permet de réaliser le moule final métallique (étape 103). La séparation des deux pièces, à savoir le moule métallique et la matrice de matériau friable, s'effectue en cassant la matrice de façon à libérer le moule métallique.

On obtient ainsi un moule métallique qui permettra de reproduire fidèlement les textures de la matrice de base sur les pneumatiques à fabriquer.

### Numéros de référence employés sur les figures

- 1: Matrice
- 2: Bloc
- 4: Sillon
- 5: Textures
- 9: Sections proéminentes
- 10: Poinçon
- 11: Secteurs comportant des textures
- 12: Stries
- 106: Brins
- 107: Lames
- 108: Section parallélépipédique
- 109: Éléments
- 111: Ouvertures
- 112: Cavités
- 113: Zones intermédiaires
- 114: Paroi

## Revendications

1. Matrice (1) représentant un modèle de sculptures d'une bande de roulement d'un pneumatique à mouler, ladite matrice étant constituée d'une pluralité de blocs (2) séparés par des sillons (4), **caractérisé en ce que** les sillons (4) sont formés par des surfaces sensiblement planes, au moins une partie de ces surfaces sensiblement planes étant pourvue de textures (5) et **en ce que** les textures des matrices sont réalisées par impression 3D ou usinage laser, à l'aide de poinçons, ou par fusion sélective de poudre métallique, ou par électro-érosion et **en ce que** les surfaces sensiblement planes pourvues de textures (5) sont sur des parois de blocs (2) et **en ce que** ladite matrice est formée par agrégation d'une pluralité de blocs.

2. Matrice selon la revendication 1, dans laquelle les surfaces sensiblement planes pourvues de textures (5) sont en fond de sillons (4).

3. Matrice selon l'une des revendications précédentes, comportant également des textures (5) sont agencées sur des sommets de sculptures.

4. Matrice selon l'une des revendications précédentes, dans laquelle les parois de blocs (2) sont biseautées.

5. Matrice selon l'une des revendications précédentes, dans laquelle les textures (5) comprennent une pluralité d'éléments en creux ou en protubérance venus de matière avec ladite matrice (1).

6. Matrice selon l'une des revendications 1 à 5, dans laquelle tout ou partie des textures (5) est formé par des cônes réparties dans la texture selon une densité au moins égale à un cône par millimètre carré (mm²), chaque cône ayant une section moyenne comprise entre 0,0005 mm² et 1 mm².

7. Matrice selon l'une des revendications 1 à 5, dans laquelle tout ou partie des textures (5) sont des stries (12) sensiblement parallèles entre elles, le pas des stries dans le motif étant au plus égal à 0,5 mm, chaque strie ayant une largeur moyenne comprise entre 0,02 mm et 0,5 mm.

8. Matrice selon l'une des revendications 1 à 5, dans laquelle tout ou partie des textures forment des parallélépipèdes de côté compris entre 0,05 mm et 0,5 mm, de hauteur comprise entre 0,05 mm et 0,5 mm, la distance entre deux parallélépipèdes adjacents dans la texture étant comprise entre 0,05 mm et 0.5 mm.

9. Matrice selon l'une des revendications 1 à 5, dans laquelle les éléments en protubérance forment des brins, lesdits brins étant répartis dans le motif selon une densité au moins égale à un brin par millimètre carré (mm²), chaque brin ayant une section moyenne comprise entre 0,0005 mm² et 1 mm².

10. Matrice selon l'une des revendications 1 à 5, dans laquelle les éléments en protubérance forment des lames (107) parallèles entre elles, le pas des lames dans le motif étant au plus égal à 0,5 mm, chaque lame ayant une largeur moyenne comprise entre 0,02 mm et 0,5 mm.

11. Matrice selon l'une des revendications 1 à 5, dans laquelle les éléments en creux ou en protubérance présentent des formes et des distances variables entre eux.

12. Procédé de fabrication d'un moule pour moulage et vulcanisation de pneumatiques, comprenant les étapes consistant à :
- fabriquer une matrice (1) selon l'une des revendications 1 à 11 comportant au moins un sillon (4) formé par des surfaces sensiblement planes, au moins une partie de ces surfaces sensiblement planes étant pourvue de textures (5) et les surfaces sensiblement planes pourvues de textures (5) sont sur des parois de blocs (2), ladite matrice étant formée par agrégation d'une pluralité de blocs;
- à partir de la matrice (1), fabriquer un moule correspondant à la forme inverse du pneumatique à mouler en matériau souple, de préférence en silastène ;
- à partir du moule en matériau souple, fabriquer une matrice en matériau friable, de préférence en plâtre, correspondant au profil du pneumatique à mouler;
- à partir de la matrice de matériau friable, fabriquer un moule correspondant à la forme inverse du pneumatique à mouler, en matériau métallique ;
- retirer la matrice de matériau friable de façon à libérer le moule métallique obtenu.
et dans lequel les textures des matrices sont réalisées par impression 3D ou usinage laser, à l'aide de poinçons, ou par fusion sélective de poudre métallique, ou par électro-érosion.

## Patentansprüche

1. Matrize (1), die ein Modell von Profilen eines Laufstreifens eines zu formenden Reifens darstellt, wobei die Matrize aus einer Mehrzahl von Blöcken (2) besteht, die durch Rillen (4) getrennt sind, **dadurch gekennzeichnet, dass** die Rillen (4) durch im Wesentlichen ebene Flächen gebildet werden, wobei zumindest ein Teil dieser im Wesentlichen ebenen Flächen mit Texturen (5) versehen ist, und dadurch, dass die Texturen der Matrizen durch 3D-Druck oder Laserbearbeitung, mithilfe von Stempeln, durch selektives Schmelzen von Metallpulver oder durch Elektroerosion ausgeführt werden, und dadurch, dass sich die im Wesentlichen ebenen, mit Texturen (5) versehenen Flächen an Wänden von Blöcken (2) befinden, und dadurch, dass die Matrize durch Aggregation einer Mehrzahl von Blöcken gebildet wird.

2. Matrize nach Anspruch 1, bei der sich die im Wesentlichen ebenen, mit Texturen (5) versehenen Flächen am Boden von Rillen (4) befinden.

3. Matrize nach einem der vorhergehenden Ansprüche, die auch Texturen (5) umfasst, an Scheitelpunkten von Profilen angeordnet sind.

4. Matrize nach einem der vorhergehenden Ansprüche, bei der die Wände von Blöcken (2) abgeschrägt sind.

5. Matrize nach einem der vorhergehenden Ansprüche, bei der die Texturen (5) eine Mehrzahl von vertieften oder erhabenen Elementen umfassen, die einstückig mit der Matrize (1) sind.

6. Matrize nach einem der Ansprüche 1 bis 5, bei der alle oder ein Teil der Texturen (5) durch Kegel gebildet werden, die in der Textur mit einer Dichte von mindestens einem Kegel je Quadratmillimeter (mm²) verteilt sind, wobei jeder Kegel einen mittleren Querschnitt zwischen 0,0005 mm² und 1 mm² hat.

7. Matrize nach einem der Ansprüche 1 bis 5, bei der alle oder ein Teil der Texturen (5) Streifen (12) sind, die im Wesentlichen parallel zueinander sind, wobei das Rastermaß der Streifen in dem Muster höchstens 0,5 mm beträgt, wobei jeder Streifen eine mittlere Breite zwischen 0,02 mm und 0,5 mm hat.

8. Matrize nach einem der Ansprüche 1 bis 5, bei der alle oder ein Teil der Texturen Quader mit einer Kantenlänge zwischen 0,05 mm und 0,5 mm und mit einer Höhe zwischen 0,05 mm und 0,5 mm bilden, wobei der Abstand zwischen zwei benachbarten Quadern in der Textur zwischen 0,05 mm und 0,5 mm beträgt.

9. Matrize nach einem der Ansprüche 1 bis 5, bei der die erhabenen Elemente Fäden bilden, wobei die Fäden in dem Muster mit einer Dichte von mindestens einem Faden je Quadratmillimeter (mm²) verteilt sind, wobei jeder Faden einen mittleren Querschnitt zwischen 0,0005 mm² und 1 mm² hat.

10. Matrize nach einem der Ansprüche 1 bis 5, bei der die erhabenen Elemente Lamellen (107) bilden, die parallel zueinander sind, wobei das Rastermaß der Lamellen in dem Muster höchstens 0,5 mm beträgt, wobei jede Lamelle eine mittlere Breite zwischen 0,02 mm und 0,5 mm hat.

11. Matrize nach einem der Ansprüche 1 bis 5, bei der die vertieften oder erhabenen Elemente untereinander variable Formen und Abstände aufweisen.

12. Verfahren zur Herstellung einer Form zum Formen und Vulkanisieren von Reifen, das die folgenden Schritte umfasst:
- Herstellen einer Matrize (1) nach einem der Ansprüche 1 bis 11, die mindestens eine Rille (4) beinhaltet, die durch im Wesentlichen ebene Flächen gebildet wird, wobei zumindest ein Teil dieser im Wesentlichen ebenen Flächen mit Texturen (5) versehen ist und sich die im Wesentlichen ebenen, mit Texturen (5) versehenen Flächen an Wänden von Blöcken (2) befinden, wobei die Matrize durch Aggregation einer Mehrzahl von Blöcken gebildet wird;
- ausgehend von der Matrize (1), Herstellen einer Form, die der Negativform des zu formenden Reifens entspricht, aus elastischem Material, bevorzugt aus Silastene;
- ausgehend von der Form aus elastischem Material, Herstellen einer Matrize aus sprödem Material, bevorzugt aus Gips, die dem Profil des zu formenden Reifens entspricht;
- ausgehend von der Matrize aus sprödem Material, Herstellen einer Form, die der Negativform des zu formenden Reifens entspricht, aus metallischem Material;
- Entnehmen der Matrize aus sprödem Material, so dass die erhaltene Metallform freigegeben wird;
und bei dem die Texturen der Matrizen durch 3D-Druck oder Laserbearbeitung, mithilfe von Stempeln oder durch selektives Schmelzen von Metallpulver oder durch Elektroerosion ausgeführt werden.

## Claims

1. Die (1) representing a tread pattern model for a tread of a tyre to be moulded, said die being made up of a plurality of blocks (2) separated by grooves (4), **characterized in that** the grooves (4) are formed by substantially flat surfaces, at least some of these substantially flat surfaces being provided with textures (5), and **in that** the textures of the dies are realized by 3D printing or laser machining, with the aid of punches, or by selective fusion of metal powder, or by electrical discharge machining, and **in that** the substantially flat surfaces provided with textures (5) are on the walls of blocks (2), and **in that** said die is formed by clustering of a plurality of blocks.

2. Die according to Claim 1, wherein the substantially flat surfaces provided with textures (5) are in the bottom of grooves (4).

3. Die according to either of the preceding claims, which also comprises textures (5) are arranged on tops of tread patterns.

4. Die according to one of the preceding claims, wherein the walls of blocks (2) are bevelled.

5. Die according to one of the preceding claims, wherein the textures (5) comprise a plurality of recessed or protruding elements formed integrally with said die (1).

6. Die according to one of Claims 1 to 5, wherein all or some of the textures (5) are formed by cones distributed through the texture at a density at least equal to one cone per square millimetre (mm²), each cone having a mean cross section of between 0.0005 mm² and 1 mm².

7. Die according to one of Claims 1 to 5, wherein all or some of the textures (5) are substantially mutually parallel striations (12), the spacing of the striations in the pattern being at most equal to 0.5 mm, each striation having a mean width of between 0.02 mm and 0.5 mm.

8. Die according to one of Claims 1 to 5, wherein all or some of the textures form parallelepipeds having a side length of between 0.05 mm and 0.5 mm and a height of between 0.05 mm and 0.5 mm, the distance between two adjacent parallelepipeds in the texture being between 0.05 mm and 0.5 mm.

9. Die according to one of Claims 1 to 5, wherein the protruding elements form strands, said strands being distributed through the pattern at a density at least equal to one strand per square millimetre (mm²), each strand having a mean cross section of between 0.0005 mm² and 1 mm².

10. Die according to one of Claims 1 to 5, wherein the protruding elements form mutually parallel blades (107), the spacing of the blades in the pattern being at most equal to 0.5 mm, each blade having a mean width of between 0.02 mm and 0.5 mm.

11. Die according to one of Claims 1 to 5, wherein the recessed or protruding elements exhibit mutually variable shapes and distances.

12. Method for manufacturing a mould for moulding and vulcanizing tyres, comprising the steps of:
- manufacturing a die (1) according to one of Claims 1 to 11 having at least one groove (4) formed by substantially flat surfaces, at least some of these substantially flat surfaces being provided with textures (5) and the substantially flat surfaces provided with textures (5) being on walls of blocks (2), said die being formed by clustering a plurality of blocks;
- manufacturing, from the die (1), a mould corresponding to the negative form of the tyre to be moulded, made of flexible material, preferably silastene;
- manufacturing, from the mould made of flexible material, a die made of brittle material, preferably plaster, corresponding to the profile of the tyre to be moulded;
- manufacturing, from the brittle material die, a mould corresponding to the negative form of the tyre to be moulded, made of metal material;
- removing the brittle material die so as to release the metal mould obtained,
and wherein the textures of the dies are realized by 3D printing or laser machining, with the aid of punches, or by selective fusion of metal powder, or by electrical discharge machining.
